# EUROPEAN PATENT SPECIFICATION

(11) **EP 4 109 799 B1**
(45) Date of publication and mention of the grant of the patent: **24.07.2024**
(21) Application number: 22178570.2
(22) Date of filing: 13.06.2022
(51) Int. Cl.: H04L 1/18

(54) **GROUPCAST COMMUNICATION FEEDBACK MECHANISM**
FEEDBACK-MECHANISMUS FÜR GROUPCAST-KOMMUNIKATION
MÉCANISME DE RÉTROACTION DE COMMUNICATION DE DIFFUSION EN GROUPE

(30) Priority: 25.06.2021 IN 202141028667
(43) Date of publication of application: 28.12.2022
(73) Proprietor: Nokia Technologies Oy, 02610 Espoo (FI)
(72) Inventor: ELMALI, Ugur Baran, Munich (DE); PONNIAH, Malathi, Bangalore (IN); DECARREAU, Guillaume, Munich (DE); PANZNER, Berthold, Holzkirchen (DE); WILDSCHEK, Torsten, Gloucester (GB)
(74) Representative: Nokia EPO representatives

(56) References cited:
- LG ELECTRONICS: "Discussion on inter-UE coordination for Mode 2 enhancements", vol. RAN WG1, no. e-Meeting; 20210412 - 20210420, 7 April 2021 (2021-04-07), XP052178122, Retrieved from the Internet <URL:https://ftp.3gpp.org/tsg_ran/WG1_RL1/TSGR1_104b-e/Docs/R1-2103379.zip R1-2103379 Discussion on inter-UE coordination for Mode 2 enhancements.docx> [retrieved on 20210407]
- LG ELECTRONICS INC: "Discussion on groupcast HARQ in NR SL", vol. RAN WG2, no. Chongqing, China; 20191014 - 20191018, 4 October 2019 (2019-10-04), XP051805242, Retrieved from the Internet <URL:https://ftp.3gpp.org/tsg_ran/WG2_RL2/TSGR2_107bis/Docs/R2-1913778.zip R2-1913778 Discussion on groupcast HARQ in NR SL.doc> [retrieved on 20191004]

## Description

### TECHNICAL FIELD

Embodiments of the present disclosure generally relate to the field of telecommunications, and in particular, to devices, methods, apparatuses and computer readable media for groupcast communication feedback.

### BACKGROUND

Some communication systems, such as New radio (NR), support groupcast, broadcast and unicast communications. The groupcast communication may be provided by a network device or by user equipment (UE).

A groupcast communication provided by a UE may involve a sidelink (SL) which can be established between the UE and a receiver device.
R1-2103379 (LG Electronics, "Discussion on inter-UE coordination for Mode 2 enhancements", 3GPP TSG RAN WG1 meeting #104bis-e, April 12 -20, 2021) discusses inter-UE coordination for mode 2 resource allocation enhancement.
R2-1913778 (LG Electronics, "Discussion on groupcast HARQ in NR SL", 3GPP TSG RAN WG2 meeting #107bis, Oct 14-18, 2019) discusses some issues related to groupcast HARQ.

### SUMMARY

In general, example embodiments of the present disclosure provide devices, methods, apparatuses and computer readable media for groupcast communication feedback. The invention is defined by the appended claims.

### BRIEF DESCRIPTION OF THE DRAWINGS

Through the more detailed description of some example embodiments of the present disclosure in the accompanying drawings, the above and other objects, features and advantages of the present disclosure will become more apparent, wherein:
Fig. 1 illustrates an example system in which example embodiments of the present disclosure may be implemented;
Fig. 2 illustrates a signalling chart illustrating an example process according to some example embodiments of the present disclosure;
Fig. 3 illustrates a signaling chart illustrating an example process according to some example embodiments of the present disclosure;
Fig. 4 illustrates a flowchart of an example method according to some example embodiments of the present disclosure;
Fig. 5 illustrates a flowchart of an example method according to some example embodiments of the present disclosure;
Fig. 6 illustrates a flowchart of an example method according to some example embodiments of the present disclosure;
Fig. 7 illustrates a simplified block diagram of a device that is suitable for implementing embodiments of the present disclosure; and
Fig. 8 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an example embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as Long Term Evolution (LTE), LTE-Advanced (LTE-A), Wideband Code Division Multiple Access (WCDMA), High-Speed Packet Access (HSPA), Narrow Band Internet of Things (NB-IoT), New Radio (NR) and so on. Furthermore, the communications between a UE and a network device or communications between network devices in the communication network may be performed according to any suitable communication protocols, including, but not limited to, the first generation (1G), the second generation (2G), 2.5G, 2.75G, the third generation (3G), the fourth generation (4G), 4.5G, the fifth generation (5G) communication protocols,. Embodiments of the present disclosure may be applied in various communication systems. It should not be seen as limiting the scope of the present disclosure to only the aforementioned system.

As used herein, the term "network device" refers to a node in a communication network via which a UE accesses the network and receives services therefrom. The network device may refer to a base station (BS) or an access point (AP), for example, a node B (NodeB or NB), an evolved NodeB (eNodeB or eNB), a NR NB (also referred to as a gNB), a remote radio unit (RRU), a radio header (RH), a remote radio head (RRH), a relay, a low power node such as a femto, a pico, and so forth, depending on the applied terminology and technology. In the following description, the terms "network device", "BS", and "node" may be used interchangeably.

The term "UE" refers to any end device that may be capable of wireless communication. By way of example rather than limitation, a UE may also be referred to as a communication device, terminal device, a Subscriber Station (SS), a Portable Subscriber Station, a Mobile Station (MS), or an Access Terminal (AT). The UE may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), Universal Serial Bus (USB) dongles, smart devices, wireless customer-premises equipment (CPE), an Internet of Things (loT) device, a watch or other wearable, a head-mounted display (HMD), a vehicle, a drone, a medical device and applications (e.g., remote surgery), a UE-type rode side unit (RSU), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

In some communication network, sidelink communication is supported, such as for a vehicle-to everything (V2X). In some communication network, for V2X sidelink communication, a transport block (TB) is carried on Physical Sidelink Shared Channel (PSSCH). ATB can be associated with Sidelink (SL) Control Information (SCI). The SCI indicates time/frequency resources to be used by the PSSCH that carries the associated TB. Additionally, the SCI can indicate further information required for decoding the TB.

The SCI may be transmitted in two stages, and accordingly, the SCI is split into two parts. The first part of SCI is carried on Physical Sidelink Control Channel (PSCCH), while the second part of SCI is carried on PSSCH together with the associated TB.

The first part of SCI allows the UEs, which are not targeted receiver UE(s) of a transmission, to decode the first part for channel sensing purposes. For example, the UEs can determine the sidelink resources reserved to other UEs. The second part of SCI provides additional control information which is required for the targeted receiver UE(s) to properly decode the corresponding TB.

In some communication network, such as NR, SL supports unicast, groupcast and broadcast. The use of hybrid automatic repeat request (HARQ) feedback is introduced for unicast and groupcast communications. One option for sending the SL HARQ feedback is based on a limited range of receiving devices. Only those UEs within the limited range are allowed to send a HARQ feedback. However, in some cases, the limited range may not be configured properly, which causes lower efficiency of groupcast service. Other communication system such as cellular communication system suffers from similar problems.

Example embodiments of the present disclosure provide a solution for HARQ feedback mechanism. In some embodiments, a device sends a request for a permission of a HARQ feedback for a groupcast communication, in this way, HARQ feedbacks from some devices are controllable.

### Example environments

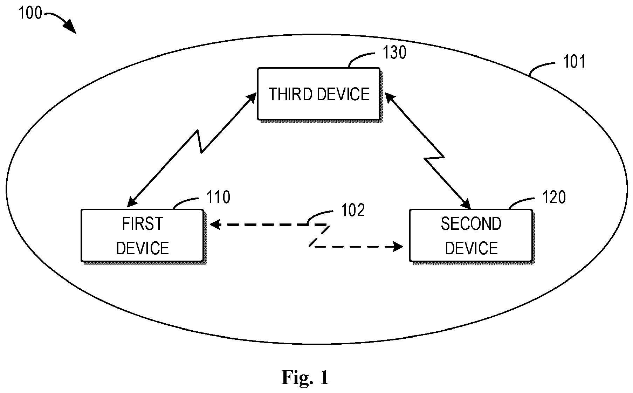

Fig. 1 shows an example system 100 in which example embodiments of the present disclosure can be implemented. The system 100 includes a first device 110, a second device 120 and a third device 130.

In some example embodiments, the first device 110 may be a terminal device, such as a UE or a vehicle. In some example embodiments, the second device 120 may be a terminal device, such as a UE or a UE-type RSU. In this case, the first device 110 and the second device 120 may be of the same or different types. In some example embodiments, the second device 120 may be a network device, such as a gNB or a network-type RSU. In some example embodiments, the third device 130 may be a network device, and both the first device 110 and the second device 120 are located within the coverage 101 of the network device.

As shown in Fig. 1, there may be a communication link 102 between the first device 110 and the second device 120. In the cases that both the first device 110 and the second device 120 are terminal devices, the communication link 102 may be a sidelink. In this case, the communication (for example, a V2X communication) between the first device 110 and the second device 120 may use a PC5 interface, for example. In the cases that the first device 110 is a network device and the second device 120 is a terminal device, the communication link 102 may be a cellular link. In this case, the communication (for example, a cellular communication) between the first device 110 and the second device 120 may use a Uu interface, for example.

As shown in Fig. 1, both the first device 110 and the second device 120 may communicate with the third device 130. In some example embodiments, the communication between the first device 110 and the third device 130 may use a Uu interface. In the cases that the second device 120 is a terminal device, the communication between the second device 120 and the third device 130 may use a Uu interface, for example. In the cases that the second device 120 is a network device, the communication between the second device 120 and the third device 130 may use a X2 interface, for example.

Note that other communication interfaces may be used for communication among the first device 110, the second device 120 and the third device 130, depending on communication technique or protocol utilized in the system 100.

Example embodiments of the present disclosure relate to the communication between the first device 110 and the second device 120. It is to be understood that Fig. 1 is shown merely for the purpose of illustration without suggesting any limitation to the protection scope. Some example embodiments are now detailed below with reference to Fig. 1.

### Example processes

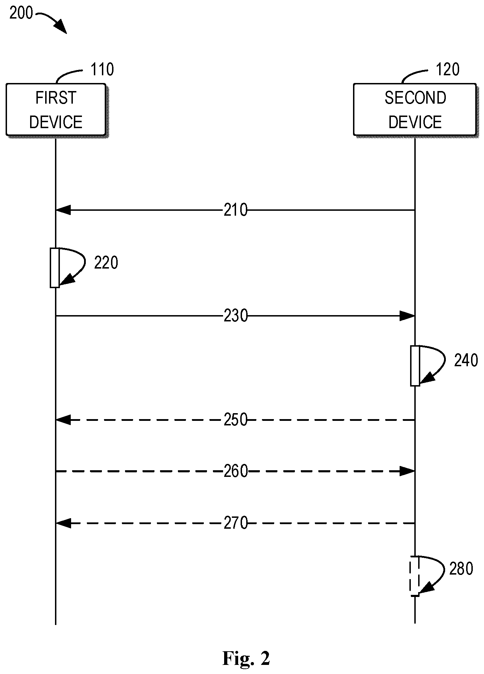

Fig. 2 illustrates a signalling chart illustrating an example process 200 for requesting a permission of a HARQ feedback according to some example embodiments of the present disclosure.

The second device 120 sends 210 a groupcast communication. In some example embodiments, the second device 120 may be a terminal device, and the groupcast communication may be a V2X communication in groupcast. In this case, the second device 120 may transmit the V2X communication on a PSSCH. Additionally, SCI indicating transmission resources of the PSSCH may be transmitted on a PSCCH prior to the transmission of the V2X communication. As such, the first device 110 may receive the groupcast communication based on the transmission resources indicated by the SCI transmitted on the PSCCH. In some example embodiments, the second device 120 may be a network device, and the groupcast communication may be a cellular communication in groupcast.

Upon receipt of the groupcast communication, the first device 110 determines 220 whether a condition is satisfied. For example, in some embodiments, the first device 110 may determine whether a distance between the first device 110 and the second device 120 exceeds a first threshold distance. If so, the condition may be considered to be met.

In some example embodiments, the first threshold distance may be preconfigured by a network device. In some example embodiments, the network device who preconfigures the first threshold distance may be the second device 120 (in the cases that the second device 120 is a network device) or the third device 130 (in the cases that the second device 120 is a terminal device). In some example embodiments, the first threshold distance (D1) may be configured through a higher layer (for example, L3) signalling. For example, an indication of D1 may be carried in a Radio Resource Control (RRC) message or a system information block (SIB) transmitted by the network device.

In some example embodiments, the first threshold distance may be preconfigured by the second device 120. For example, the first threshold distance may be carried in the groupcast communication transmitted by the second device 120. For another example, the first threshold distance may be transmitted prior to the transmission of the groupcast communication, e.g., the second device 120 may transmit SCI on a PSCCH which carries the first threshold distance.

In some example embodiments, the first threshold distance may be determined based on a configured range within which the first device 110 is allowed to send a feedback without sending a request. In the cases that the second device 120 is a terminal device, the configured range may be a minimum communication range (MCR) which is indicated in SCI. When the first device 110 is located within the MCR, it is allowed to send a HARQ feedback without a request. In some example embodiments, the first threshold distance may equal to the minimum required communication range, in other words, the first threshold distance is a distance limitation whether a request is allowed.

In some example embodiments, the distance determined by the first device 110 may be an average distance based on one or more configured filter parameters. The first device 110 may measure the instantaneous distance for several times over a period of time, and then determine an average distance based on one or more averaging filter parameters. In this way, the distance can be more accurate. In some example embodiments, the averaging filter parameters may be preconfigured by a network device.

Alternatively, or in addition, in some example embodiments, in determining 220 whether the condition is met, the first device 110 may determine whether the distance between the first device 110 and the second device 120 is below a second threshold distance.

In some example embodiments, the second threshold distance may be preconfigured by a network device. In some example embodiments, the network device who preconfigures the second threshold distance may be the second device 120 (in the cases that the second device 120 is a network device) or the third device 130 (in the cases that the second device 120 is a terminal device). In some example embodiments, the second threshold distance (D2) may be configured through a higher layer (for example, L3) signalling. For example, an indication of D2 may be carried in a RRC message or a SIB transmitted by the network device.

In some example embodiments, the second threshold distance may be preconfigured by the second device 120 in the cases that the second device 120 is a terminal device. For example, the second threshold distance may be carried in the groupcast communication transmitted by the second device 120. For another example, the second threshold distance may be transmitted prior to the transmission of the groupcast communication, e.g., the second device 120 may transmit SCI on a PSCCH which carries the second threshold distance.

In some example embodiments, the second threshold distance may be explicitly or implicitly configured. In some example embodiments, an indication of the second threshold distance or an indication of a difference threshold between the second threshold distance and the first threshold may be transmitted from the third device 130 or the second device 120.

In some example embodiments, the second device 120 is a network device, and the second threshold distance may be determined based on the coverage of the second device 120. In this case, the second threshold distance is used to limit that the first device 110 should locate within the coverage of the second device 120. In some example embodiments, the second threshold distance may be equal to or less than a radius of the coverage area of the second device 120.

In some example embodiments, the second threshold distance or the different threshold is configured based on actual needs, such as service type, service accuracy, etc., so that the condition requires that the distance between the first device 110 and the second device 120 is slightly larger than the first threshold distance. For example, the difference threshold is configured as one-tenth of the first threshold distance or other value.

It is to be understood that, in determining 220, the first device 110 measures the distance between the first device 110 and the second device 120, and then the distance may be compared with the first threshold distance or both the first threshold distance and the second threshold distance. For example, if the determined distance is between the first threshold distance and the second threshold distance, the condition may be considered to be satisfied.

Additionally, or in addition, in some example embodiments, in determining 220 whether the condition is met, the first device 110 may determine whether a measured quality of service (QoS) of the groupcast communication is lower than a preconfigured QoS threshold value. In some embodiments, the preconfigured QoS threshold value may indicate a required QoS for the groupcast communication.

The first device 110 may measure the QoS of the groupcast communication, and then the QoS of the groupcast communication may be compared with a preconfigured QoS threshold value. In this way, the first device 110 may determine whether the QoS of the groupcast communication is lower than the preconfigured QoS threshold value.

In some example embodiments, the QoS of the groupcast communication may be measured over a configured period of time to be more reliable. The period of time, which is used to get the measured QoS of the groupcast communication, is preconfigured by the network device, through a RRC message or a SIB, for example.

In some example embodiments, a QoS difference threshold value may also be configured, so that the condition requires that the measured QoS of the groupcast communication is lower than the preconfigured QoS threshold value, but the difference is no more than the QoS difference threshold value.

In some example embodiments, the preconfigured QoS threshold value and/or the QoS difference threshold value may be configured by the third device 130 or be the second device 120. For example, the preconfigured QoS threshold value and/or the QoS difference threshold value may be carried in SCI.

Additionally, or in addition, in some example embodiments, in determining 220 whether the condition if met, the first device 110 may determine whether the number of feedbacks, that the first device 110 fails to send due to the distance (e.g., MCR) limitation within a predefined time period, exceeds a preconfigured value.

Specifically, upon receipt of the groupcast communication, the first device 110 may try to decode a TB from the groupcast communication. If the first device 110 fails to decode a TB, then it may wish to send a negative acknowledge (NACK) feedback to the second device 120. However, in some embodiments, only those UEs that are located within a certain range/distance (e.g., MCR) to the transmitter are allowed to send HARQ feedback for the groupcast communication. This may be referred to as a distance limitation for sending HARQ feedback. UEs may not be able to send HARQ feedback for failed detection of the groupcast communication due to this distance limitation. For example, if the distance between the first device 110 and the second device 120 exceeds a threshold distance, e.g., MCR, then the sending of NACK feedback may not be allowed due to the distance limitation. The first device 110 may determine the number of feedbacks that it fails to send a feedback due to the distance limitation within a predefined time period. If the number exceeds a preconfigured value, the condition may be considered as satisfied. The preconfigured value may indicate a maximum number of HARQ feedback occasions that can be skipped at a configured period of time because of the distance limitation.

In some example embodiments, the predefined time period may be preconfigured by the third device 130 or by the second device 120. For example, the indication of the predefined time period may be carried in SCI. It should be understood that there is no limitation on the value of the predefined time period, for example, it may be 100ms, or it may be longer or shorter than 100ms.

In some example embodiments, there may be a counter set on the first device 110. The counter may be incremented by the first device 110. The counter may be used to count the number of feedbacks that it fails to send a feedback due to the distance limitation within a predefined time period. In some embodiments, the counter is increased for a feedback not sent by the first device due to the distance limitation only when the measured QoS is below the QoS threshold (e.g., the QoS requirements of the service). In this case the condition requires that the number of feedbacks, that the first device 110 fails to send due to the distance limitation and when the measured QoS is below the QoS requirements of the service, exceeds a preconfigured value within a predefined time period.

In some example embodiments, there may be a counter, together with a timer defining the predefined time period, set on the first device 110. The counter may be incremented in response to failing to send a feedback because of the distance limitation. The number of feedbacks that the first device 110 fails to send within a predefined time period due to a distance limitation may be obtained based on the counter upon the timer expiring.

In some example embodiments, the preconfigured value may be determined by the third device 130 or by the second device 120. As an example, the preconfigured value may be any value based on the actual scenario, which is determined by the second device 120 and carried in SCI.

Based on the determining 220 that the condition is met, the first device 110 sends 230 a request to the second device 120 for a permission of a HARQ feedback for the groupcast communication. It should be understood that the request may be transmitted via unicast.

In some example embodiments, the communication link between the first device 110 and the second device 120 is a sidelink, and the request may be transmitted through the sidelink.

In some example embodiments, if there is not an established communication link between the first device 110 and the second device 120, the first device 110 may establish a communication link with the second device 120. For example, the first device 110 may establish a PC5 connection as a communication link with the second device 120, and then the request may be transmitted to the second device 120 through the established PC5 connection.

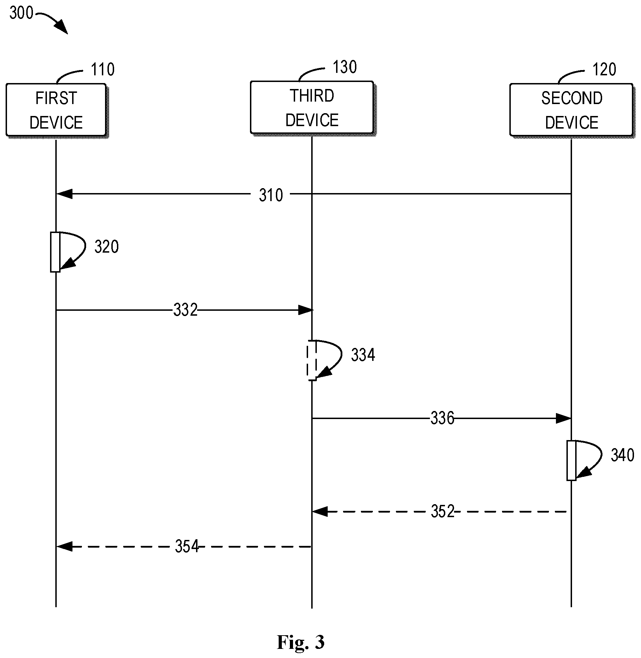

In some example embodiments, the first device 110 may send the request via the third device 130 to the second device 120. In this case, the request may be transmitted from the first device 110 to the third device 130, and then the third device may forward the request to the second device 120. A detailed description on some embodiments for this case will be shown below with reference to Fig. 3.

In some example embodiments, the request sent from the first device 110 to the second device 120 may comprise one or more of: (a) the distance between the first device 110 and the second device 120, (b) a position of the first device 110, (c) a moving speed of the first device 110, (d) a moving direction of the first device 110, (e) channel state information (CSI) measurements, (f) the number of feedbacks that the first device 110 fails to send within a predefined time period due to a distance limitation, (g) an indication of an error rate of groupcast communication, or (h) a measured QoS of the groupcast communication.

In some example embodiments, the CSI measurements may include one or more of the following: a Channel Quality Indication (CQI), Reference Signal Receiving Power (RSRP), a channel busy ratio (CBR) of the communication link between the first device 110 and the second device 120. In some example embodiments, the error rate of the groupcast communication may be an error rate during a configured period of time which may be indicated in a form of block error rate, or the number of failed detection.

In the example process 200, at least based on the received request, the second device 120 determines 240 whether to send the permission.

The determination 240 may be based on one or more factors, for example but not limited to: a distance between the first device 110 and the second device 120, a position of the first device 110, a moving speed of the first device 110, a moving direction of the first device 110, CSI measurements, the number of feedbacks that the first device 110 fails to send within a predefined time period due to a distance limitation, an error rate of groupcast communication, a measured QoS of the groupcast communication, a service type of the groupcast communication, or any combination thereof.

In some example embodiments, the service type of the groupcast communication may be any of: vehicle-to-vehicle (V2V), vehicle-to-infrastructure (V2I), vehicle-to-pedestrian (V2P), vehicle-to-network (V2N), cellular, etc.

In some example embodiments, the second device 120 may determine to not allow the first device 110 to send a feedback. For example, the first device 110 may be travelling in a parallel street with the second device 120 and the moving direction is opposite, then the second device 120 may reject the request immediately, which may be more efficient and can save processing cost on the second device 120. In this case, the second device 120 may transmit a rejection to the first device 110, or the second device 120 may just keep silent and ignore the request.

In some example embodiments, the second device 120 may determine to allow the first device 110 to send a feedback though the distance between them exceeds the first threshold distance. In this case, the second device 120 may send 250 the permission of the HARQ feedback to the first device 110.

The permission can be regarded as consent to the request and may be transmitted in unicast. In some example embodiments, the permission may be transmitted through the communication link between the first device 110 and the second device 120. In some example embodiments, the permission may be transmitted via the third device 130, as described with reference to Fig. 3.

In this way, the first device 110 with a distance exceeding the first threshold distance (e.g., MCR) may still acquire a chance for sending HARQ feedback by sending a request to the second device 120. This may improve QoS of the first device 110. Since the request is sent only when a condition is satisfied, the impact of the request transmission to the system is controllable. In addition, the second device 120 may send a permission to allow the HARQ feedback from the first device 110 when needed. Therefore, a HARQ feedback can be transmitted from the first device 110 only when a permission is provided. This makes the feedback process controllable. This may avoid or reduce impact to other devices in the system, and the corresponding groupcast service may be improved.

Alternatively, or in addition, in some example embodiments, if the permission from the second device 120 is received, the first device 110 may transmit 260 a NACK feedback to the second device 120, for one or more failed detection of the groupcast communication. In some example embodiments, the NACK feedback may be transmitted on preconfigured group common resources. In some example embodiments, the permission allows the first device 110 to send HARQ feedback (e.g., NACK only feedback) without considering the distance limitation within a configured time period.

In some example embodiments, after receiving the permission, the first device 110 may still check whether the condition is still satisfied. If not, the transmission of the NACK feedback may be ceased. For example, if the first device 110 determines the distance between the first device 110 and the second device 120 exceeds the second threshold distance, then the NACK feedback will not be sent.

In some example embodiments, upon receiving the permission, the first device 110 may try to detect the groupcast communication. In response to failing to detect the groupcast communication and the condition is still satisfied, the first device 110 may send a NACK feedback to the second device 120.

In the example process 200, upon receipt of the NACK feedback, the second device 120 may then retransmit 270 the groupcast communication. It should be understood that the NACK feedback and the retransmission may be performed for several times until a stop condition is met.

In some example embodiments, the stop condition may comprise that the condition triggering the transmission of the request is not satisfied any more. For example, if the distance between the first device 110 and the second device 120 exceeds the second threshold distance, the first device 110 may stop sending NACK feedback. For example, if the measured QoS of the groupcast communication exceeds the preconfigured QoS threshold value, the first device 110 may stop sending NACK feedback.

In some example embodiments, the stop condition may comprise a configured time period for the HARQ feedback. There may be a timer-based criterion for the first device 110, so that the first device 110 may cease sending the NACK feedback upon a predefined time period expiry. For example, the first device 110 may start a timer upon receiving the permission from the second device 120, whose value is preconfigured by the third device or by the second device 120. Upon the timer expiry, the first device 110 stops sending the NACK feedback.

In some example embodiments, the stop condition may comprise a QoS criterion. For example, if the first device 110 determines that a current HARQ feedback rate exceeds a HARQ feedback rate threshold, the first device 110 may stop sending NACK feedback. The current HARQ feedback rate refers to a proportion of a number of feedback occasions that the first device 110 sent NACK feedback divided by a total number of feedback occasions in a specific amount of time. The HARQ feedback rate threshold may be a preconfigured value. In some examples, the HARQ feedback rate threshold may be transmitted from the second device 120, together with the permission. In some examples, the HARQ feedback rate threshold may be configured by the network device.

In some example embodiments, the second device 120 or the third device 130 may transmit a HARQ feedback rate threshold to the first device 110.

In some example embodiments, the HARQ feedback rate threshold may be an allowed maximum HARQ feedback rate. The HARQ feedback rate threshold may be transmitted together with the permission or it may be transmitted separately. The HARQ feedback rate threshold may be compared, by the first device 110, with a current HARQ feedback rate to determine whether a stop condition is satisfied.

In some example embodiments, the HARQ feedback rate threshold may be preconfigured by the third device 130. In some example embodiments, the first device 110 may transmit a current HARQ feedback rate to the second device 120. It is to be understood that the current HARQ feedback rate may be transmitted periodically or event-based. The current HARQ feedback rate refers to a ratio of the number of feedback occasions that the first device 110 sent NACK feedback to a total number of feedback occasions in a specific amount of time. In some embodiments, the current HARQ feedback rate may be compared, by the second device 120, with a HARQ feedback rate threshold to determine whether a stop condition is satisfied, or whether a permission for HARQ feedback is to be revoked.

In some example embodiments, the stop condition may comprise receiving information to stop from the second device 120. In some example embodiments, the information may be used to revoke the permission. For example, if the second device 120 determines that a current HARQ feedback rate exceeds a HARQ feedback rate threshold, then the second device 120 may send information to the first device 110 for stop sending NACK feedback. It is to be understood that the current HARQ feedback rate may be transmitted periodically or event-based. For example, if the second device 120 determines that an overall spectral efficiency is reduced to be lower than a spectral efficiency threshold value, then the second device 120 may send information to the first device 110 for stop sending NACK feedback. The first device 110 may stop sending the HARQ feedback based on the information from the second device 120.

Alternatively, or in addition, in some example embodiments, the second device 120 may update 280 the first threshold distance based on the request. For example, the first threshold distance may be updated to the distance between the first device 110 and the second device 120, which will be larger. In some example embodiments, the second device 120 may update the MCR to a larger range for future uses.

In the example process 200, the first device 110 may send a request to the second device 120 for a permission of a HARQ feedback for the groupcast communication. In this way, the first device 110 may send a NACK feedback while failing to detect the groupcast communication, based on the permission from the second device 120. Therefore, the first device 110 may satisfy the QoS requirements of the groupcast communication of the second device 120 with only a small amount of retransmission, which may enable the groupcast service more efficient.

Reference is now made to Fig. 3. Fig. 3 illustrates a signaling chart illustrating an example process 300 for requesting a permission of a HARQ feedback according to some example embodiments of the present disclosure.

The second device 120 sends 310 a groupcast communication. Upon receipt of the groupcast communication, the first device 110 determines 320 whether a condition is satisfied. Based on the determining 320, the first device 10 sends 332 a request to the third device 130 for a permission of a HARQ feedback for the groupcast communication based on the determination.

In some example embodiments, as shown in Fig. 1, both the first device 110 and the second device 120 are within the coverage 101 of the third device 130. In this case, the request may go through the third device 130 for Self-Organizing Network (SON) purposes.

Upon receipt of the request, the third device 130 forwards 336 the request to the second device 120. In this case, the third device 130 may directly relay the request to the second device 120.

Alternatively, or in addition, in some example embodiments, the third device 130 generates 334 a recommendation on the request, and then forwards 336 the request and the recommendation to the second device 120. It is to be understood that the recommendation is used to indicate an opinion on whether a permission may be issued, and it may also be called as "an indication", "a suggestion", "an opinion", "an advice", "reference information", etc.

In this case, the third device 130 may generate the recommendation based on a channel condition of the channel between the third device 130 and the first device 110, a channel condition of the channel between the third device 130 and the second device 120, and one or more other factors which will not be listed here. It is to be understood that the recommendation may be consent or a rejection on the request, which indicates a recommendation on whether the permission should be issued.

Upon receipt of the request, the second device 120 determines 340 whether to send the permission. In some example embodiments, the second device 120 may make the determination in combination with the recommendation from the third device 130.

In some example embodiments, the second device 120 may make the decision the same with the recommendation from the third device 130. However, the second device 120 may make the decision by itself regardless of the recommendation from the third device 130.

In some example embodiments, the second device 120 may determine to allow the first device 110 to send a feedback. In this case, the second device 120 sends 352 the permission of the HARQ feedback to the third device 130.

The third device 130 forwards 354 the permission to the first device 110. In some example embodiments, the third device 130 may directly relay the permission to the first device 110.

In some example embodiments, the third device 130 may monitor a permission from the second device 120, after the forwarding 336. In case there is a permission, the third device 130 may forward it to the first device 110. In this case, the third device 130 may take part in the decision process and may assist the transmission between the second device 120 and the first device 110. Therefore, the transmission may be enhanced and the groupcast service may be more efficient.

It is to be understood that acts with the similar reference signs as in Fig. 3 are similar as those described with reference to Fig. 2 and thus are not repeatedly described in detail here. It is also to be understood that although the example processes 200 and 300 are described separately, aspects of the two processes may be combined. For example, in sending 352, a HARQ feedback rate threshold may be transmitted together with the permission. For example, some more operations may be performed after 354 in the example process 300, as described with reference to Fig. 2.

### Example methods and apparatuses

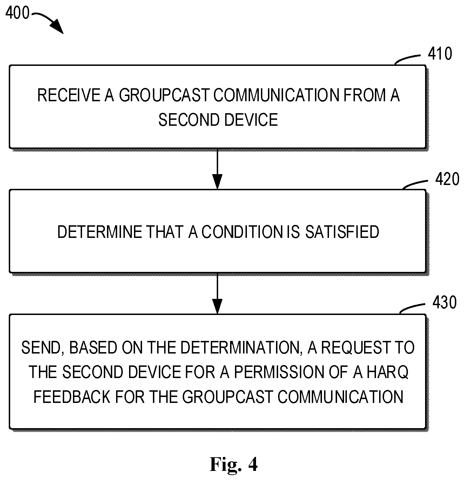

Fig. 4 shows a flowchart of an example method 400 for requesting a permission of a HARQ feedback in accordance with some example embodiments of the present disclosure. The method 400 can be implemented at the first device 110 as shown in Fig. 1.

At block 410, the first device 110 receives a groupcast communication from a second device 120.

At block 420, the first device 110 determines that a condition is satisfied. As discussed above, the condition comprises a distance between the first and second devices 110, 120 exceeding a first threshold distance.

In some embodiments, the distance may be an averaged distance based on one or more averaging filter parameters preconfigured by a network device within whose coverage the first device 110 located or by the second device 120. In some embodiments, the first threshold distance may be determined based on a minimum communication range (MCR), within which the first device 110 is allowed to send the HARQ feedback without sending the request. The first threshold distance and/or the MCR may be preconfigured by a network device or by the second device 120.

In some embodiments, the condition may further include that the distance is lower than a second threshold distance. Alternatively or in addition, in some embodiments, the condition may include that a measured QoS of the groupcast communication is lower than a preconfigured QoS threshold value, which may be configured by a network device or by the second device 120. In some embodiments, the condition may include that a measured QoS of the groupcast communication is lower than a preconfigured QoS threshold value but higher than a further QoS threshold. Alternatively or in addition, in some embodiments, the condition may include that the number of feedbacks, that the first device 110 fails to send within a predefined time period due to a distance limitation, exceeds a preconfigured value. The predefined time period and/or the preconfigured value may be preconfigured by a network device or by the second device 120. Note that the condition may include a combination of one or more of the above examples.

At block 430, the first device 110 sends, based on the determination that the condition is satisfied, a request to the second device 120 for a permission of a hybrid automatic repeat request (HARQ) feedback for the groupcast communication.

In some embodiments, the first device 110 may send the request via a third device 130. In this case, the first device 110 may send the request to the third device 130, so that the third device 130 may forward the request to the second device 120.

In some embodiments, the request may include one or more of the following: the distance between the first and second devices 110, 120, a position of the first device 110, a moving speed of the first device 110, a moving direction of the first device 110, channel state information (CSI) measurements, the number of feedbacks that the first device 110 fails to send within a predefined time period due to a distance limitation, an indication of an error rate of groupcast communication, or a measured QoS of the groupcast communication.

In some embodiments, the first device 110 may further receive a permission of the HARQ feedback from the second device 120. In some embodiments, the permission may be forwarded by the third device 130. In this case, the first device 110 may receive a permission of the HARQ feedback from the third device 130, which is forwarded from the second device 120.

In some embodiments, the first device 110 may send a negative acknowledgement (NACK) feedback to the second device 120 for one or more failed detection of the groupcast communication.

In some embodiments, the first device 110 may send an indication of a current HARQ feedback rate to the second device 120. The current HARQ feedback refers to the proportion of the number of feedback occasions that the first device 110 sent NACK feedback divided by number of feedback occasions in a specific amount of time. In some embodiments, the first device 110 may receive a HARQ feedback rate threshold from the second device 120 or the third device 130.

In some embodiments, the first device 110 may stop sending the NACK feedback at least based on one or more of the following: a current HARQ feedback rate exceeds a configured HARQ feedback rate threshold, the condition triggering the transmission of the request is not satisfied any more, information to stop the HARQ feedback is received from the second device 120, or a configured time period for the HARQ feedback expires. Some examples have been described with reference to Figs.2-3.

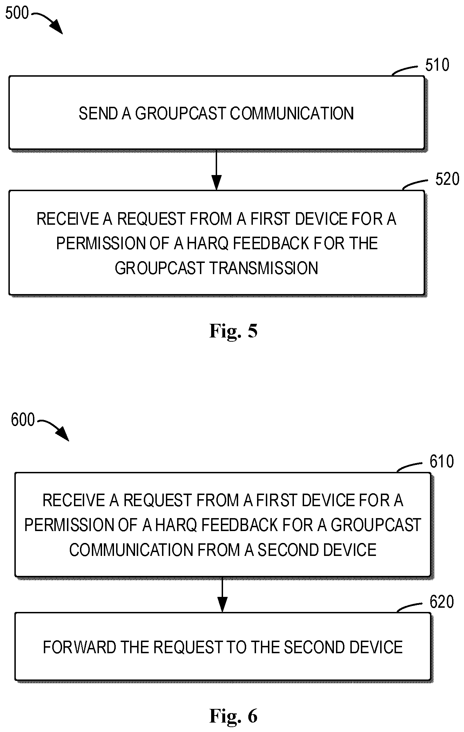

Fig. 5 shows a flowchart of an example method 500 for requesting a permission of a HARQ feedback in accordance with some example embodiments of the present disclosure. The method 500 can be implemented at the second device 120 as shown in Fig. 1.

At block 510, the second device 120 sends a groupcast communication.

In some embodiments, the second device 120 may be a terminal device, and the groupcast communication may be a V2X communication in groupcast. In some embodiments, the second device 120 may be a network device, and the groupcast communication may be a cellular communication in groupcast.

At block 520, the second device 120 receives a request from a first device 110 for a permission of a hybrid automatic repeat request (HARQ) feedback for the groupcast communication.

In some embodiments, the request may be transmitted via a third device 130. In this case, the second device 120 may receive the request from the third device 130, which is forwarded by the third device 130 from the first device 110. In some embodiments, the second device 120 may receive a recommendation from the third device 130, which indicates a recommendation on whether a permission may be issued.

In some embodiments, the receipt of the request may indicate, e.g., implicitly, that a distance between the first and second devices 110, 120 exceeds a first threshold distance, or the distance is between the first threshold distance and a second threshold distance. In some embodiments, the receipt of the request may indicate, e.g., implicitly, at least one of the following is satisfied: the number of feedbacks that the first device 110 fails to send within a predefined time period due to distance limitation exceeds a preconfigured value, or a measured quality of service (QoS) of the groupcast communication is lower than a preconfigured QoS threshold value.

In some embodiments, the request may include one or more of the following: the distance between the first and second devices 110, 120, a position of the first device 110, a moving speed of the first device 110, a moving direction of the first device 110, channel state information (CSI) measurements, the number of feedbacks that the first device 110 fails to send within a predefined time period due to a distance limitation, an indication of an error rate of groupcast communication, or a measured QoS of the groupcast communication.

In some embodiments, the second device 120 may send a permission of the HARQ feedback to the first device 110. In some embodiments, the permission may be transmitted via a third device 130. In this case, the second device 120 may send the permission of the HARQ feedback to the third device 130, so that the third device 130 may forward the permission to the first device 110.

In some embodiments, the second device 120 may receive a NACK feedback from the first device 110, for one or more failed detection of the groupcast communication. In some embodiments, the second device 120 may retransmit the group communication upon receiving the NACK feedback.

In some embodiments, the second device 120 may receive an indication of a current HARQ feedback rate from the first device 110, the current HARQ feedback refers to the proportion of the number of feedback occasions that the first device 110 sent NACK feedback divided by number of feedback occasions in a specific amount of time. Further, the second device 120 may send, e.g., when it determines that the current HARQ feedback rate exceeds a HARQ feedback rate threshold, information to the first device 110 for stopping sending the NACK feedback without consenting distance limitation. Note that, the second device 120 may send the information to stop the NACK feedback based on other criterion, e.g., distance change, or resource efficiency, performance of other UEs in the system, etc..

In some embodiments, the second device 120 may send a HARQ feedback rate threshold to the first device 110, so that the first device 110 may determine whether to stop sending the NACK feedback based on the HARQ feedback rate threshold.

Fig. 6 shows a flowchart of an example method 600 for requesting a permission of a HARQ feedback in accordance with some example embodiments of the present disclosure. The method 600 can be implemented at the third device 130 as shown in Fig. 1.

At block 610, the third device 130 receives a request from a first device 110 for a permission of a hybrid automatic repeat request (HARQ) feedback for a groupcast communication from a second device 120.

In some embodiments, the first and second devices 110, 120 are within the coverage of the third device 130, the third device 130 may be a network device.

In some embodiments, the request may include one or more of the following: the distance between the first and second devices 110, 120, a position of the first device 110, a moving speed of the first device 110, a moving direction of the first device 110, channel state information (CSI) measurements, the number of feedbacks that the first device 110 fails to send within a predefined time period due to a distance limitation, an indication of an error rate of groupcast communication, or a measured QoS of the groupcast communication.

At block 620, the third device 130 forwards the request to the second device 120.

In some embodiments, the third device 130 may make a recommendation on whether a permission may be issued, and send the recommendation to the second device 120.

In some embodiments, the third device 130 may further receive permission of the HARQ feedback from the second device 120. In some embodiments, the third device 130 may further forward the permission to the first device 110.

In some example embodiments, a first apparatus capable of performing the method 400 may comprise means for performing the respective operations of the method 400. The means may be implemented in any suitable form. For example, the means may be implemented in a circuitry or software module. In some embodiments, the means may comprise at least one processor and at least one memory. The first apparatus may be implemented as or included in the first device 110.

In some example embodiments, the first apparatus comprises: means for receiving a groupcast communication from a second apparatus; means for determining that a condition is satisfied, the condition comprising a distance between the first and second apparatuses exceeding a first threshold distance; and means for sending, based on the determination, a request to the second apparatus for a permission of a hybrid automatic repeat request (HARQ) feedback for the groupcast communication.

In some example embodiments, the first threshold distance is determined based on a minimum communication range (MCR), within which the first apparatus is allowed to send the HARQ feedback without sending the request.

In some example embodiments, the condition also comprises at least one of: the distance is below a second threshold distance; the number of feedbacks, that the first apparatus fails to send within a predefined time period due to a distance limitation, exceeds a preconfigured value; or a measured quality of service (QoS) of the groupcast communication is lower than a preconfigured QoS threshold value.

The second threshold distance is larger than the first threshold distance. In some embodiments, the second threshold distance may be configured explicitly, or may be derived based on the first threshold distance and a configured offset. For example, the second threshold distance may be derived as: a sum of the first threshold distance and the configured offset, where the offset is a configured value which is no less than zero.

In some example embodiments, the first apparatus comprises: means for receiving the permission of the HARQ feedback from the second apparatus; and means for sending a negative acknowledgement (NACK) feedback to the second apparatus for one or more failed detection of the groupcast communication.

In some example embodiments, the first apparatus comprises: means for stopping sending NACK feedback, in response to at least one of the following: a current HARQ feedback rate exceeds a configured HARQ feedback rate threshold, the condition is not satisfied any more, information to stop the HARQ feedback is received from the second apparatus, or a configured time period for the HARQ feedback expires.

In some example embodiments, the first apparatus comprises: means for sending an indication of a current HARQ feedback rate to the second apparatus, or means for receiving the HARQ feedback rate threshold from the second apparatus.

In some example embodiments, the permission is received via a third apparatus.

In some example embodiments, the request comprises at least one of the following: the distance between the first and second apparatuses, a position of the first apparatus, a moving speed of the first apparatus, a moving direction of the first apparatus, channel state information (CSI) measurements, the number of feedbacks that the first apparatus fails to send within a predefined time period due to a distance limitation, an indication of an error rate of groupcast communication, or a measured QoS of the groupcast communication.

In some example embodiments, the means for sending the request comprises: means for sending the request to the second apparatus via a third apparatus.

In some example embodiments, the distance is averaged based on one or more configured filter parameters.

In some example embodiments, a second apparatus capable of performing the method 500 may comprise means for performing the respective operations of the method 500. The means may be implemented in any suitable form. For example, the means may be implemented in a circuitry or software module. In some embodiments, the means may comprise at least one processor and at least one memory. The second apparatus may be implemented as or included in the second device 120.

In some example embodiments, the second apparatus comprises: means for sending a groupcast communication; and means for receiving a request from a first apparatus for a permission of a hybrid automatic repeat request (HARQ) feedback for the groupcast communication.

In some example embodiments, a distance between the first and second apparatuses exceeds a first threshold distance, or the distance is between the first threshold distance and a second threshold distance which is larger than the first threshold distance.

In some example embodiments, receiving of the request implicitly indicates that at least one of the following is satisfied: the number of feedbacks, that the first apparatus fails to send within a predefined time period due to a distance limitation, exceeds a preconfigured value, or a measured quality of service (QoS) of the groupcast communication is lower than a preconfigured QoS threshold value.

In some example embodiments, the second apparatus comprises: means for sending the permission of the HARQ feedback to the first apparatus.

In some example embodiments, the second apparatus comprises: means for receiving an indication of a current HARQ feedback rate from the first apparatus; and means for sending, in response to a determination that the current HARQ feedback rate exceeds a HARQ feedback rate threshold, information to the first apparatus for stopping sending the NACK feedback without consenting distance limitation.

In some example embodiments, the second apparatus comprises: means for sending a HARQ feedback rate threshold to the first apparatus.

In some example embodiments, means for sending the permission comprises: means for sending the permission to the first apparatus via a third apparatus.

In some example embodiments, the request comprises at least one of the following: a distance between the first and second apparatuses, a position of the first apparatus, a moving speed of the first apparatus, a moving direction of the first apparatus, channel state information (CSI) measurements, the number of feedbacks that the first apparatus fails to send within a predefined time period due to a distance limitation, an indication of an error rate of groupcast communication, or a measured QoS of the groupcast communication.

In some example embodiments, means for receiving the request comprises: means for receiving the request from the first apparatus via a third apparatus.

In some example embodiments, the second apparatus comprises: means for receiving a recommendation on whether to send the permission from the third apparatus.

In some example embodiments, a third apparatus capable of performing the method 600 may comprise means for performing the respective operations of the method 600. The means may be implemented in any suitable form. For example, the means may be implemented in a circuitry or software module. In some embodiments, the means may comprise at least one processor and at least one memory. The third apparatus may be implemented as or included in the third device 130.

In some example embodiments, the third apparatus comprises: means for receiving a request from a first apparatus for a permission of a hybrid automatic repeat request (HARQ) feedback for a groupcast communication from a second apparatus; and means for forwarding the request to the second apparatus.

In some example embodiments, the third apparatus comprises: means for sending, to the second apparatus, a recommendation on whether to send the permission to the first apparatus.

In some example embodiments, the third apparatus comprises: means for receiving a permission of the HARQ feedback from the second apparatus; and means for forwarding the permission to the first apparatus.

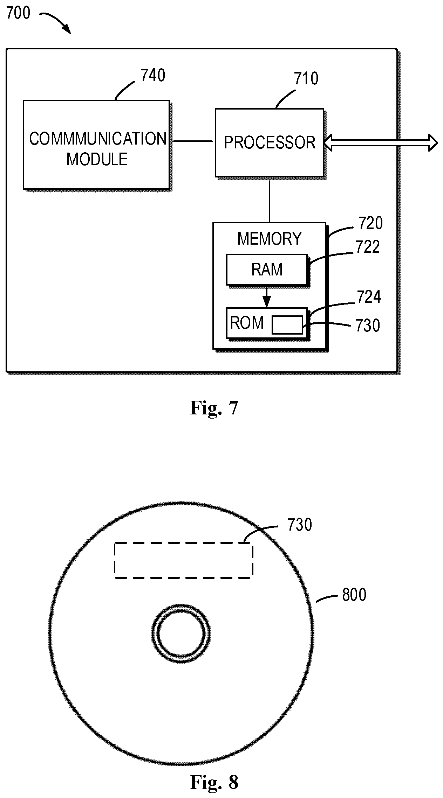

Fig. 7 is a simplified block diagram of a device 700 that is suitable for implementing embodiments of the present disclosure. For example, the first device 110, the second device 120, and the third device 130, shown in Fig. 1 may be implemented by the device 700. As shown, the device 700 includes one or more processors 710, one or more memories 720 coupled to the processor 710, and one or more communication modules 740 coupled to the processor 710.

The communication module 740 is for groupcast communications. The communication module 740 has at least one antenna to facilitate communication. The communication interface may represent any interface that is necessary for communication with other network elements.

The processor 710 may be of any type suitable to the local technical network and may include one or more of the following: general purpose computers, special purpose computers, microprocessors, digital signal processors (DSPs) and processors based on multicore processor architecture, as non-limiting examples. The device 700 may have multiple processors, such as an application specific integrated circuit chip that is slaved in time to a clock which synchronizes the main processor.

The memory 720 may include one or more non-volatile memories and one or more volatile memories. Examples of the non-volatile memories include, but are not limited to, a Read Only Memory (ROM) 724, an electrically programmable read only memory (EPROM), a flash memory, a hard disk, a compact disc (CD), a digital versatile disc (DVD), and other magnetic storage and/or optical storage. Examples of the volatile memories include, but are not limited to, a random access memory (RAM) 722 and other volatile memories that will not last in the power-down duration.

A computer program 730 includes computer executable instructions that are executed by the associated processor 710. The program 730 may be stored in the ROM 724. The processor 710 may perform any suitable actions and processing by loading the program 730 into the RAM 722.

The embodiments of the present disclosure may be implemented by means of the program 730 so that the device 700 may perform any process of the disclosure as discussed with reference to Figs. 2-6. The embodiments of the present disclosure may also be implemented by hardware or by a combination of software and hardware.

In some example embodiments, the program 730 may be tangibly contained in a computer readable medium which may be included in the device 700 (such as in the memory 720) or other storage devices that are accessible by the device 700. The device 700 may load the program 730 from the computer readable medium to the RAM 722 for execution. The computer readable medium may include any types of tangible non-volatile storage, such as ROM, EPROM, a flash memory, a hard disk, CD, DVD, and the like. Fig. 8 shows an example of the computer readable medium 800 in form of CD or DVD. The computer readable medium has the program 730 stored thereon.

It should be appreciated that future networks may utilize network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications, this may mean node operations to be carried out, at least partly, in a central/centralized unit, CU, (e.g. server, host or node) operationally coupled to distributed unit, DU, (e.g. a radio head/node). It is also possible that node operations will be distributed among a plurality of servers, nodes or hosts. It should also be understood that the distribution of labour between core network operations and base station operations may vary depending on implementation.

In an embodiment, the server may generate a virtual network through which the server communicates with the distributed unit. In general, virtual networking may involve a process of combining hardware and software network resources and network functionality into a single, software-based administrative entity, a virtual network. Such virtual network may provide flexible distribution of operations between the server and the radio head/node. In practice, any digital signal processing task may be performed in either the CU or the DU and the boundary where the responsibility is shifted between the CU and the DU may be selected according to implementation.

Therefore, in an embodiment, a CU-DU architecture is implemented. In such case the device 700 may be comprised in a central unit (e.g. a control unit, an edge cloud server, a server) operatively coupled (e.g. via a wireless or wired network) to a distributed unit (e.g. a remote radio head/node). That is, the central unit (e.g. an edge cloud server) and the distributed unit may be stand-alone apparatuses communicating with each other via a radio path or via a wired connection. Alternatively, they may be in a same entity communicating via a wired connection, etc. The edge cloud or edge cloud server may serve a plurality of distributed units or a radio access networks. In an embodiment, at least some of the described processes may be performed by the central unit. In another embodiment, the device 700 may be instead comprised in the distributed unit, and at least some of the described processes may be performed by the distributed unit.

In an embodiment, the execution of at least some of the functionalities of the device 700 may be shared between two physically separate devices (DU and CU) forming one operational entity. Therefore, the apparatus may be seen to depict the operational entity comprising one or more physically separate devices for executing at least some of the described processes. In an embodiment, such CU-DU architecture may provide flexible distribution of operations between the CU and the DU. In practice, any digital signal processing task may be performed in either the CU or the DU and the boundary where the responsibility is shifted between the CU and the DU may be selected according to implementation. In an embodiment, the device 700 controls the execution of the processes, regardless of the location of the apparatus and regardless of where the processes/functions are carried out.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method 400, 500, or 600 as described above with reference to Figs. 4-6. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A first apparatus, the first apparatus comprising:
means for receiving a groupcast communication from a second apparatus;
means for determining that a condition is satisfied, the condition comprising a distance between the first and second apparatuses exceeding a first threshold distance;
means for sending, based on the determination, a request to the second apparatus for a permission of a hybrid automatic repeat request feedback for the groupcast communication; and
means for receiving the permission of the HARQ feedback from the second apparatus.

2. The first apparatus of claim 1, wherein the first threshold distance is determined based on a minimum communication range, within which the first apparatus is allowed to send the Hybrid Automatic Repeat Request, HARQ, feedback without sending the request.

3. The first apparatus of any one of claims 1-2, wherein the condition further comprises at least one of that:
the distance is below a second threshold distance,
the number of feedbacks, that the first apparatus fails to send within a predefined time period due to a distance limitation, exceeds a preconfigured value, or
a measured quality of service, QoS, of the groupcast communication is lower than a preconfigured QoS threshold value.

4. The first apparatus of any one of claims 1-3, further comprising:
means for sending a negative acknowledgement, NACK, feedback to the second apparatus for one or more failed detection of the groupcast communication.

5. The first apparatus of claim 4, further comprising means for causing the first apparatus to:
in response to at least one of the following, stop sending NACK feedback:
a current HARQ feedback rate exceeds a configured HARQ feedback rate threshold,
the condition is not satisfied any more,
information to stop the HARQ feedback is received from the second apparatus, or
a configured time period for the HARQ feedback expires.

6. The first apparatus of claim 4, further comprising means for causing the first apparatus to:
send an indication of a current HARQ feedback rate to the second apparatus.

7. The first apparatus of any one of claims 4-6, wherein the permission is received via a third apparatus.

8. A second apparatus, the second apparatus comprising:
means for sending a groupcast communication;
means for receiving a request from a first apparatus for a permission of a hybrid automatic repeat request feedback for the groupcast communication, wherein the request is received responsive to a determination by the first apparatus that a condition is satisfied, the condition comprising a distance between the first and second apparatuses exceeding a first threshold distance; and
means for sending the permission of the HARQ feedback to the first apparatus.

9. The second apparatus of claim 8, wherein a distance between the first and second apparatus exceeds a first threshold distance, or the distance is between the first threshold distance and a second threshold distance larger than the first threshold distance.

10. The second apparatus of claim 9, wherein the first threshold distance is determined based on a minimum communication range, within which the first apparatus is allowed to send the HARQ feedback without sending the request.

11. A third apparatus, the third apparatus comprising:
means for receiving a request from a first apparatus for a permission of a hybrid automatic repeat request feedback for a groupcast communication from a second apparatus, wherein the request is received responsive to a determination by the first apparatus that a condition is satisfied, the condition comprising a distance between the first and second apparatuses exceeding a first threshold distance;
means for forwarding the request to the second apparatus;
means for receiving the permission of the HARQ feedback from the second apparatus; and
means for forwarding the permission to the first apparatus.

12. A method comprising:
receiving, at a first apparatus, a groupcast communication from a second apparatus;
determining, at the first apparatus, that a condition is satisfied, the condition comprising a distance between the first and second apparatus exceeding a first threshold distance;
based on the determination, sending, by the first apparatus, a request to the second apparatus for a permission of a hybrid automatic repeat request feedback for the groupcast
communication; and
receiving the permission of the HARQ feedback from the second apparatus.

13. A method comprising:
sending, at a second apparatus, a groupcast communication;
receiving, by the second apparatus, a request from a first apparatus for a permission of a hybrid automatic repeat request feedback for the groupcast communication, *wherein the request is received responsive to a determination by the first apparatus that a condition is satisfied, the condition comprising a distance between the first and second apparatuses exceeding a first threshold* distance; and
sending the permission of the HARQ feedback to the first apparatus.

14. A method comprising:
Receiving, at a third apparatus, a request from a first apparatus for a permission of a hybrid automatic repeat request feedback for a groupcast communication from a second apparatus, wherein the request is received responsive to a determination by the first apparatus that a condition is satisfied, the condition comprising a distance between the first and second apparatuses exceeding a first threshold distance;
forwarding, by the third apparatus, the request to the second apparatus;
receiving the permission of the HARQ feedback from the second apparatus; and
forwarding the permission to the first apparatus.

15. A computer program comprising instructions which, when the program is executed by an apparatus, cause the apparatus to perform a method of any of claims 12 to 14.

## Patentansprüche

1. Erste Vorrichtung, wobei die erste Vorrichtung Folgendes umfasst:
Mittel zum Empfangen einer Gruppencastkommunikation von einer zweiten Vorrichtung;
Mittel zum Bestimmen, dass eine Bedingung erfüllt ist, wobei die Bedingung einen Abstand zwischen der ersten und der zweiten Vorrichtung umfasst, die einen ersten Schwellwertabstand überschreitet;
Mittel zum Senden einer Anforderung auf Basis der Bestimmung an die zweite Vorrichtung für eine Genehmigung einer Rückmeldung für eine hybride automatische Wiederholungsanforderung für die Gruppencastkommunikation; und
Mittel zum Empfangen der Genehmigung der HARQ-Rückmeldung von der zweiten Vorrichtung.

2. Erste Vorrichtung nach Anspruch 1, wobei der erste Schwellwertabstand auf Basis eines minimalen Kommunikationsbereichs bestimmt wird, innerhalb dessen es der ersten Vorrichtung erlaubt ist, die Rückmeldung an eine hybride automatische Wiederholungsanforderung, HARQ, zu senden, ohne die Anforderung zu senden.

3. Erste Vorrichtung nach einem der Ansprüche 1 bis 2, wobei die Bedingung ferner mindestens eines von Folgendem umfasst:
der Abstand liegt unter einem zweiten Schwellwertabstand,
die Anzahl von Rückmeldungen, die von der ersten Vorrichtung innerhalb einer vordefinierten Zeitperiode aufgrund einer Abstandsbegrenzung nicht gesendet werden, überschreitet einen vorausgelegten Wert, oder
eine gemessene Dienstqualität, QoS, der Gruppencastkommunikation ist niedriger als ein vorausgelegter QoS-Schwellwert.

4. Erste Vorrichtung nach einem der Ansprüche 1 bis 3, die ferner Folgendes umfasst:
Mittel zum Senden einer Rückmeldung zu einer Negativbestätigung, NACK, an die zweite Vorrichtung für eine oder mehrere fehlgeschlagene Detektionen der Gruppencastkommunikation.

5. Erste Vorrichtung nach Anspruch 4, die ferner Mittel zum Veranlassen der ersten Vorrichtung zu Folgendem umfasst:
in Reaktion auf mindestens eines von Folgendem Beenden des Sendens einer NACK-Rückmeldung:
eine aktuelle HARQ-Rückmeldungsrate überschreitet einen ausgelegten HARQ-Rückmeldungsratenschwellwert,
die Bedingung ist nicht mehr erfüllt,
von der zweiten Vorrichtung werden Informationen zum Beenden der HARQ-Rückmeldung empfangen, oder
eine ausgelegte Zeitperiode für die HARQ-Rückmeldung ist abgelaufen.

6. Erste Vorrichtung nach Anspruch 4, die ferner Mittel zum Veranlassen der ersten Vorrichtung zu Folgendem umfasst:
Senden einer Anzeige einer aktuellen HARQ-Rückmeldungsrate an die zweite Vorrichtung.

7. Erste Vorrichtung nach einem der Ansprüche 4 bis 6, wobei die Genehmigung via eine dritte Vorrichtung empfangen wird.

8. Zweite Vorrichtung, wobei die zweite Vorrichtung Folgendes umfasst:
Mittel zum Senden einer Gruppencastkommunikation;
Mittel zum Empfangen einer Anforderung von einer ersten Vorrichtung für eine Genehmigung einer Rückmeldung zu einer hybriden automatischen Wiederholungsanforderung für die Gruppencastkommunikation, wobei die Anforderung in Reaktion auf eine Bestimmung durch die erste Vorrichtung, dass eine Bedingung erfüllt ist, empfangen wird, wobei die Bedingung umfasst, dass ein Abstand zwischen der ersten und der zweiten Vorrichtung einen ersten Schwellwertabstand überschreitet; und
Mittel zum Senden der Genehmigung der HARQ-Rückmeldung an die erste Vorrichtung.

9. Zweite Vorrichtung nach Anspruch 8, wobei ein Abstand zwischen der ersten und der zweiten Vorrichtung einen ersten Schwellwertabstand überschreitet, oder der Abstand zwischen dem ersten Schwellwertabstand und einem zweiten Schwellwertabstand größer ist als der erste Schwellwertabstand.

10. Zweite Vorrichtung nach Anspruch 9, wobei der erste Schwellwertabstand auf Basis eines minimalen Kommunikationsbereichs bestimmt wird, innerhalb dessen es der ersten Vorrichtung erlaubt ist, die HARQ-Rückmeldung zu senden, ohne die Anforderung zu senden.

11. Dritte Vorrichtung, wobei die dritte Vorrichtung Folgendes umfasst:
Mittel zum Empfangen einer Anforderung von einer ersten Vorrichtung für eine Genehmigung einer Rückmeldung zu einer hybriden automatischen Wiederholungsanforderung für eine Gruppencastkommunikation von einer zweiten Vorrichtung, wobei die Anforderung in Reaktion auf eine Bestimmung durch die erste Vorrichtung, dass eine Bedingung erfüllt ist, empfangen wird, wobei die Bedingung umfasst, dass ein Abstand zwischen der ersten und der zweiten Vorrichtung einen ersten Schwellwertabstand überschreitet;
Mittel zum Weiterleiten der Anforderung an die zweite Vorrichtung;
Mittel zum Empfangen der Genehmigung der HARQ-Rückmeldung von der zweiten Vorrichtung; und
Mittel zum Weiterleiten der Genehmigung an die erste Vorrichtung.

12. Verfahren, das Folgendes umfasst:
Empfangen einer Gruppencastkommunikation an einer ersten Vorrichtung von einer zweiten Vorrichtung;
Bestimmen an der ersten Vorrichtung, dass eine Bedingung erfüllt ist, wobei die Bedingung umfasst, dass ein Abstand zwischen der ersten und der zweiten Vorrichtung einen ersten Schwellwertabstand überschreitet;
Senden einer Anforderung auf Basis der Bestimmung durch die erste Vorrichtung an die zweite Vorrichtung für eine Genehmigung einer Rückmeldung für eine hybride automatische Wiederholungsanforderung für die Gruppencastkommunikation; und
Empfangen der Genehmigung der HARQ-Rückmeldung von der zweiten Vorrichtung.

13. Verfahren, das Folgendes umfasst:
Senden einer Gruppencastkommunikation an einer zweiten Vorrichtung;
Empfangen einer Anforderung durch die zweite Vorrichtung von einer ersten Vorrichtung für eine Genehmigung einer Rückmeldung zu einer hybriden automatischen Wiederholungsanforderung für die Gruppencastkommunikation, wobei die Anforderung in Reaktion auf eine Bestimmung durch die erste Vorrichtung, dass eine Bedingung erfüllt ist, empfangen wird, wobei die Bedingung umfasst, dass ein Abstand zwischen der ersten und der zweiten Vorrichtung einen ersten Schwellwertabstand überschreitet; und
Senden der Genehmigung der HARQ-Rückmeldung an die erste Vorrichtung.

14. Verfahren, das Folgendes umfasst:
Empfangen einer Anforderung an einer dritten Vorrichtung von einer ersten Vorrichtung für eine Genehmigung einer Rückmeldung zu einer hybriden automatischen Wiederholungsanforderung für eine Gruppencastkommunikation von einer zweiten Vorrichtung, wobei die Anforderung in Reaktion auf eine Bestimmung durch die erste Vorrichtung, dass eine Bedingung erfüllt ist, empfangen wird, wobei die Bedingung umfasst, dass ein Abstand zwischen der ersten und der zweiten Vorrichtung einen ersten Schwellwertabstand überschreitet;
Weiterleiten der Anforderung durch die dritte Vorrichtung an die zweite Vorrichtung;
Empfangen der Genehmigung der HARQ-Rückmeldung von der zweiten Vorrichtung; und
Weiterleiten der Genehmigung an die erste Vorrichtung.

15. Computerprogramm, das Anweisungen umfasst, die, wenn das Programm von einer Einrichtung ausgeführt wird, die Vorrichtung veranlassen, ein Verfahren nach einem der Ansprüche 12 bis 14 durchzuführen.

## Revendications

1. Premier appareil, le premier appareil comprenant :
des moyens pour recevoir une communication de diffusion de groupe d'un deuxième appareil ;
des moyens pour déterminer qu'une condition est satisfaite, la condition comprenant le fait qu'une distance entre les premier et deuxième appareils dépasse une première distance seuil ;
des moyens pour envoyer, sur la base de la détermination, une demande au deuxième appareil pour permettre une rétroaction de demande de répétition automatique hybride pour la communication de diffusion de groupe ; et
des moyens pour recevoir la permission de la rétroaction HARQ du deuxième appareil.

2. Premier appareil selon la revendication 1, dans lequel la première distance seuil est déterminée sur la base d'une portée de communication minimale dans laquelle le premier appareil est autorisé à envoyer la rétroaction de demande de répétition automatique hybride, HARQ, sans envoyer la demande.

3. Premier appareil selon l'une des revendications 1 et 2, dans lequel la condition comprend en outre au moins l'un des cas suivants :
la distance est inférieure à une deuxième distance seuil,
le nombre de rétroactions que le premier appareil ne parvient pas à envoyer dans une période de temps prédéfinie en raison d'une limitation de distance dépasse une valeur préconfigurée, ou
une qualité de service, QoS, mesurée de la communication de diffusion de groupe est inférieure à une valeur seuil QoS préconfigurée.

4. Premier appareil selon l'une des revendications 1 à 3, comprenant en outre :
des moyens pour envoyer une rétroaction d'accusé de réception négatif, NACK, au deuxième appareil en cas d'échec d'une ou plusieurs détections de la communication de diffusion de groupe.

5. Premier appareil selon la revendication 4, comprenant en outre des moyens pour amener le premier appareil à :
en réponse à au moins l'un des cas suivants, arrêter d'envoyer la rétroaction NACK :
un taux de rétroaction HARQ actuel dépasse un seuil de taux de rétroaction HARQ configuré,
la condition n'est plus satisfaite,
des informations d'arrêt de la rétroaction HARQ sont reçues du deuxième appareil, ou
un période de temps configurée pour la rétroaction HARQ expire.

6. Premier appareil selon la revendication 4, comprenant en outre des moyens pour amener le premier appareil à :
envoyer une indication d'un taux de rétroaction HARQ actuel au deuxième appareil.

7. Premier appareil selon l'une des revendications 4 à 6, dans lequel la permission est reçue via un troisième appareil.

8. Deuxième appareil, le deuxième appareil comprenant :
des moyens pour envoyer une communication de diffusion de groupe ;
des moyens pour recevoir une demande d'un premier appareil pour permettre une rétroaction de demande de répétition automatique hybride pour la communication de diffusion de groupe, dans lequel la demande est reçue après avoir déterminé par le premier appareil qu'une condition est satisfaite, la condition comprenant le fait qu'une distance entre les premier et deuxième appareils dépasse une première distance seuil ; et
des moyens pour envoyer la permission de la rétroaction HARQ au premier appareil.

9. Deuxième appareil selon la revendication 8, dans lequel une distance entre les premier et deuxième appareils dépasse une première distance seuil, ou la distance se situe entre la première distance seuil et une deuxième distance seuil plus grande que la première distance seuil.

10. Deuxième appareil selon la revendication 9, dans lequel la première distance seuil est déterminée sur la base d'une portée de communication minimale dans laquelle le premier appareil est autorisé à envoyer la rétroaction HARQ sans envoyer la demande.

11. Troisième appareil, le troisième appareil comprenant :
des moyens pour recevoir une demande d'un premier appareil pour permettre une rétroaction de demande de répétition automatique hybride pour une communication de diffusion de groupe d'un deuxième appareil, dans lequel la demande est reçue après avoir déterminé par le premier appareil qu'une condition est satisfaite, la condition comprenant le fait qu'une distance entre les premier et deuxième appareils dépasse une première distance seuil ;
des moyens pour transférer la demande au deuxième appareil ;
des moyens pour recevoir la permission de la rétroaction HARQ du deuxième appareil ; et
des moyens pour transférer la permission au premier appareil.

12. Procédé comprenant :
la réception d'un deuxième appareil, au niveau d'un premier appareil, d'une communication de diffusion de groupe ;
la détermination, au niveau du premier appareil, de la satisfaction d'une condition, la condition comprenant le fait qu'une distance entre les premier et deuxième appareils dépasse une première distance seuil ;
sur la base de la détermination, l'envoi, par le premier appareil, d'une demande au deuxième appareil pour permettre une rétroaction de demande de répétition automatique hybride pour la communication de diffusion de groupe ; et
la réception de la permission de la rétroaction HARQ du deuxième appareil.

13. Procédé comprenant :
l'envoi, au niveau d'un deuxième appareil, d'une communication de diffusion de groupe ;
la réception, par le deuxième appareil, d'une demande d'un premier appareil pour permettre une rétroaction de demande de répétition automatique hybride pour la communication de diffusion de groupe, dans lequel la demande est reçue après avoir déterminé par le premier appareil qu'une condition est satisfaite, la condition comprenant le fait qu'une distance entre les premier et deuxième appareils dépasse une première distance seuil ; et
l'envoi de la permission de la rétroaction HARQ au premier appareil.

14. Procédé comprenant :
la réception, au niveau d'un troisième appareil, d'une demande d'un premier appareil pour permettre une rétroaction de demande de répétition automatique hybride pour une communication de diffusion de groupe d'un deuxième appareil, dans lequel la demande est reçue après avoir déterminé par le premier appareil qu'une condition est satisfaite, la condition comprenant le fait qu'une distance entre les premier et deuxième appareils dépasse une première distance seuil ;
le transfert, par le troisième appareil, de la demande au deuxième appareil ;
la réception la permission de la rétroaction HARQ du deuxième appareil ; et
le transfert de la permission au premier appareil.

15. Programme informatique comprenant des instructions qui, lorsque le programme est exécuté par un appareil, amènent l'appareil à effectuer un procédé selon l'une des revendications 12 à 14.
